# EUROPÄISCHE PATENTSCHRIFT

(11) **EP 2 671 775 B1**
(45) Veröffentlichungstag und Bekanntmachung des Hinweises auf die Patenterteilung: **04.12.2019**
(21) Anmeldenummer: 13001381.6
(22) Anmeldetag: 18.03.2013
(51) Int. Cl.: B62D 21/02, B62D 21/09, B62D 21/11

(54) **Rahmen- oder Lenkkonstruktion für ein Nutzfahrzeug**
Frame or guidance construction for a commercial vehicle
Structure de châssis ou de direction pour un véhicule utilitaire

(30) Priorität: 08.06.2012 DE 102012011414
(43) Veröffentlichungstag der Anmeldung: 11.12.2013
(73) Patentinhaber: MAN Truck & Bus SE, 80995 München (DE)
(72) Erfinder: Grötzinger, Josef, 84032 Landshut (DE); Kolbinger, Sebastian, 80333 München (DE); Ziehlke, Jürgen, 85416 Langenbach (DE); Eberle, Andreas, 83358 Seebruck (DE); Vrecko, Alexander, 80993 München (DE); Acer, Serkan, 87719 Mindelheim (DE); Noebauer, Andreas, 85735 Neufahrn (DE); Mó, Daniel Concepcion, 09080-240 Santo André - SP (BR); Ueda, Oscar Massachi, 27510-080 Resende - RJ (BR)
(74) Vertreter: v. Bezold & Partner Patentanwälte - PartG mbB

(56) Entgegenhaltungen:
- EP-A1- 0 940 272
- DE-A1-102006 041 664
- DE-A1-102008 045 008
- DE-A1-102009 033 826

## Beschreibung

Die Erfindung betrifft eine Tragkonstruktion, insbesondere Rahmen- oder Lenkkonstruktion, für ein Kraftfahrzeug, vorzugsweise ein Nutzfahrzeug wie z.B. ein Omnibus oder ein Lastkraftwagen.

DE 10 2009 033826 A1 offenbart ein Trägerprofil eines Fahrgestellrahmens, insbesondere eines Nutzfahrzeugs mit einem wenigstens einen Durchbruch aufweisenden Steg, der zur Verbindung mit einem weiteren Trägerprofil über einen Stoßbereich verfügt, an dem in der Ebene des Stegs verlaufende, gedachte Zug- und/oder Drucktrajektoren ansetzen, die den Verlauf des Kraftflusses widerspiegeln, wobei der in dem Steg vorgesehene Durchbruch von wenigstens zwei sich schneidenden Zug- und/oder Drucktrajektoren begrenzt ist und die Schenkel der Zug- und/oder Drucktrajektoren im Bereich des Schnittpunktes die Form einer Parabelkerbe aufweisen.

Aus der DE 10 2008 045 008 A1 ist ein Nutzfahrzeugrahmen bekannt, der sich aus vorgefertigten Modulen zusammensetzt. Jedes Modul umfasst zwei durch Querträger miteinander verbundene Längsträgerabschnitte. Die jeweils benachbarten Längsträgerabschnitte aneinander angrenzender Module sind durch ein Befestigungsorgan miteinander verbunden, das als Multifunktionslagerbock ausgeführt ist, der Seitenwände aufweist, die zueinander gewinkelt angeordnet sind und die zur Versteifung des Multifunktionslagerbocks zumindest bereichsweise Einlagewände einfassen, die in einem Winkel zur Längsachse des Multifunktionslagerbocks verlaufen. Der Querträger und die Längsträger erstrecken sich auf dem gleichen Niveau und sind an den oberen Abschnitten der Multifunktionslagerböcke befestigt. Bei vielen Nutzfahrzeugarten ist es jedoch wünschenswert, den innerhalb des Nutzfahrzeugs zur Verfügung stehenden Raum zu vergrößern und somit die Raumnutzungseffektivität zu verbessern.

Aufgabe der Erfindung ist es, eine verbesserte und/oder alternative Tragkonstruktion zu schaffen, insbesondere mit dem Ziel, den zur Verfügung stehenden Raum innerhalb eines Nutzfahrzeugs zu vergrößern.

Diese Aufgabe kann insbesondere durch die Merkmale des Hauptanspruchs gelöst werden. Vorteilhafte Weiterbildungen sind den Unteransprüchen zu entnehmen.

Erfindungsgemäß wird eine Tragkonstruktion, insbesondere Rahmen- oder Lenkkonstruktion, für ein Kraftfahrzeug, vorzugsweise Nutzfahrzeug (z.B. ein Lastkraftwagen oder ein Omnibus), geschaffen. Die Tragkonstruktion umfasst zumindest einen Tragbock, mit dem zumindest ein Querträger und eine Spantkonstruktion (z.B. ein sich zweckmäßig parallel zu dem Querträger erstreckender Träger, z.B. ein U-Profil-Träger) verbunden sind. Die Tragkonstruktion zeichnet sich insbesondere dadurch aus, dass der Querträger tiefer angeordnet ist als die Spantkonstruktion. Dadurch kann ein Höhenversatz erzeugt werden, der z.B. den innerhalb des Kraftfahrzeugs zur Verfügung stehenden Raum vergrößern kann.

Die Tragkonstruktion umfasst zumindest eine Stützeinrichtung, die zwischen dem Querträger und der Spantkonstruktion angeordnet ist. Alternativ oder ergänzend kann die zumindest eine Stützeinrichtung zumindest abschnittsweise innerhalb des Höhenversatzes angeordnet sein. Die Stützeinrichtung dient insbesondere dazu, den Tragbock und somit zweckmäßig allgemein die Tragkonstruktion auszusteifen und/oder um einen sprunghaften, zumindest den Tragbock, den Querträger und die Spantkonstruktion umfassenden Kraftfluss, der ohne eine Stütz- oder Versteifungseinrichtung auftreten würde, zumindest zu reduzieren oder zu glätten. Dadurch kann zweckmäßig eine sanftere Kraftflussänderung und somit eine tragwerkstechnisch verbesserte Tragkonstruktion realisiert werden.

Vorzugsweise dient die Stützeinrichtung nicht nur zur Aussteifung, sondern zusätzlich als Tragbock für eine Lenkeinrichtung, insbesondere eine Dreiecklenkereinrichtung. Zu diesem Zweck ist die Stützeinrichtung zweckmäßig mit einer Verbindungseinrichtung versehen, über die die Lenkeinrichtung an der Stützeinrichtung montiert werden kann.

Die Tragkonstruktion umfasst außerdem vorzugsweise zumindest einen Längsträger, der zwischen dem Tragbock und der Stützeinrichtung verläuft.

Die Stützeinrichtung ist vorzugsweise an dem Querträger montiert und an einem Längsträger, der vorzugsweise an dem Tragbock montiert ist, wodurch zweckmäßig die Stützeinrichtung über den Längsträger mit dem Tragbock in Wirkverbindung steht.

Es ist möglich, dass der Tragbock, der Längsträger und die Stützeinrichtung aneinander festgelegt sind und zwar vorzugsweise über ein und dieselben Festmachmittel. So ist es z.B. möglich, dass ein und dieselben Schrauben genutzt werden, um den Tragbock, den Längsträger und die Stützeinrichtung miteinander zu verbinden.

Die Stützeinrichtung ist vorzugsweise als Winkelteil ausgeführt und/oder weist zwei Befestigungsflächen auf, die z.B. höhenmäßig zumindest abschnittsweise voneinander beabstandet sind und/oder die sich schräg, vorzugsweise im Wesentlichen rechtwinklig zueinander erstrecken.

Vorzugsweise ist die Stützeinrichtung mittels eines Zwischenraums von dem Querträger zumindest abschnittsweise beabstandet und/oder erstreckt sich zumindest abschnittsweise entlang des Querträgers. Es ist möglich, dass die Stützeinrichtung mit einem im Wesentlichen vertikalen Abschnitt des Querträgers (z.B. dessen Steg) verbunden ist und/oder mit einem oberen Abschnitt des Querträgers (z.B. dessen Flansch) verbunden ist.

Der Tragbock kann z.B. höhenmäßig voneinander beabstandete Flanschmittel aufweisen, die zweckmäßig von dem Grundkörper des Tragbocks abstehen und an denen den Spantkonstruktion verbunden ist, vorzugsweise um den Kraftfluss definiert aufnehmen und weiterleiten zu können.

Die Tragkonstruktion kann einen zusätzlichen Querträger aufweisen, der mit dem Tragbock verbunden ist und der unter dem Niveau des Querträgers verläuft.

Außerdem kann die Tragkonstruktion eine Zusatzverstrebung zur Verstärkung der Tragkonstruktion umfassen, die sich relativ zu dem Querträger schräg oder im Wesentlichen parallel erstreckt. Die Zusatzverstrebung kann sich zwischen dem Tragbock und der Spantkonstruktion erstrecken, vorzugsweise unter dem Niveau der Spantkonstruktion und/oder seitlich zu dem Querträger. Es ist ebenso möglich, dass die Zusatzverstrebung einerseits mit dem Tragbock verbunden ist und andererseits mit der Spantkonstruktion und/oder einem Nutzfahrzeugaufbau (z.B. einer Seitenwand oder Seitensäule davon) .

Es ist möglich, dass der Querträger und der zusätzliche Querträger die im Wesentlichen gleiche Breite aufweisen oder sogar im Wesentlichen baugleich ausgeführt sind, was insbesondere durch eine entsprechende Konfiguration der Tragböcke realisiert werden kann.

Der Tragbock kann einen oberen Bereich, einen mittleren Bereich und einen unteren Bereich umfassen, wobei die Spantkonstruktion über den oberen Bereich und der Querträger über den mittleren Bereich mit dem Tragbock verbunden sind. Alternativ oder ergänzend ist es möglich, dass der Längsträger über den oberen Bereich und ein Längslenker und/oder der zusätzliche Querträger über den unteren Bereich mit dem Tragbock verbunden sind. Ebenso kann die Zusatzverstrebung vorzugsweise über den unteren Bereich mit dem Tragbock verbunden werden.

Es ist möglich, dass zumindest der Grundkörper des Tragbocks und/oder zumindest der Grundkörper der Stützeinrichtung als Gussteil ausgeführt ist. Im Rahmen der Erfindung ist es durchaus möglich, dass an diese Gussteile z.B. zusätzliche Halteeinrichtungen montiert werden, z.B. angenietet, angeschraubt und/oder angeschweißt.

Es ist möglich, dass der Längsträger als U-Profil ausgeführt ist und die Stützeinrichtung sich z.B. abschnittsweise zwischen den Flanschen des U-Profils erstreckt und/oder mit dem Steg des U-Profils verbunden ist. Alternativ oder ergänzend ist es möglich, dass die Stützeinrichtung mit einem vorzugsweise oberen Abschnitt des Querträgers verbunden ist, z.B. dem Flansch und/oder dem Steg des Querträgers.

Der Querträger, die Spantkonstruktion, der zusätzliche Querträger und/oder die Zusatzverstrebung erstrecken sich vorzugsweise parallel zueinander und/oder bilden einen Querträgerverband.

Vorzugsweise erstreckt sich der Höhenversatz zwischen Oberkante Querträger und Oberkante Längsträger und/oder Oberkante Spantkonstruktion.

Der Höhenversatz kann z.B. mindestens 5 cm, 10 cm, 15 cm, 20 cm oder 25 cm betragen.

Er entspricht vorzugsweise ungefähr der Höhe der Spantkonstruktion und/oder der Höhe des Längsträgers.

Die Tragkonstruktion umfasst zweckmäßig einen Querträgerverband, der vorzugsweise vor der Triebachse des Kraftfahrzeugs anzuordnen ist. Der Querträgerband wird z.B. gebildet durch den Querträger, die Spantkonstruktion, den zusätzlichen Querträger und/oder die Zusatzverstrebung.

Es ist möglich, dass der zusätzliche Querträger und die Zusatzverstrebung Einzelteile sind oder ein einstückiges, vorzugsweise integrales Teil bilden.

Es ist möglich, dass der Querträger, der Längsträger, die Spantkonstruktion, der zusätzliche Querträger und/oder die Zusatzverstrebung an dem Tragbock befestigt sind. Im Rahmen der Erfindung ist es aber auch möglich, dass Zwischenstücke vorgesehen sind, um die letztgenannten Teile mit dem Tragbock zu verbinden.

Zu erwähnen ist, dass die Tragkonstruktion unter Bezugnahme auf nur einen Tragbock beschrieben worden ist, der Querträger zweckmäßig aber natürlich an beiden Seiten (sozusagen links und rechts) mit jeweils einem Tragbock versehen ist und somit insgesamt zwei Tragböcke umfasst.

Vorzugsweise ist der Tragbock relativ zu einer Symmetrieebene zumindest so nahezu symmetrisch ausgeführt, um in Bezug auf den Querträger an beiden Seiten verwendet werden zu können. Dadurch wird ermöglicht, dass ein zumindest im Wesentlichen baugleicher Tragbock an beiden Seiten des Querträgers angeordnet ist und/oder die Tragböcke baugleich ausgeführt sind. Mit anderen Worten ist es somit im Rahmen der Erfindung möglich, dass der Querträger links und rechts mit baugleichen Tragböcken versehen ist. Daraus ergeben sich z.B. Kostenersparnisse (z.B. im Hinblick auf Herstellkosten, Maschinenkosten, Werkzeugkosten, Verwaltungskosten, etc.), aber auch eine Reduzierung von Sachnummern wird ermöglicht.

Zu erwähnen ist außerdem, dass im Rahmen der Erfindung der Trackbock relativ zu der Symmetrieebene nicht vollkommen symmetrisch ausgeführt sein muss und/oder die Tragböcke auf den beiden Seiten des Querträgers nicht vollkommen gleich ausgeführt sein müssen. Es reicht zweckmäßig aus, dass sie sich gleichen. Nachbearbeitungen, Fertigungstoleranzen, nachträgliche Montagen, Anbauteile, etc. sind durch die Erfindung ebenfalls umfasst.

Zu erwähnen ist außerdem, dass die mit dem Tragbock zu verbindenden Elemente (z.B. der Querträger, der Längsträger, der Längslenker, der zusätzliche Querträger, etc.) an dem Tragbock vorzugsweise unmittelbar befestigbar sind, aber auch durchaus Ausführungsformen möglich sind, in dem sie über zusätzliche Zwischenstücke mittelbar mit dem Tragbock verbunden sind.

Ferner ist zu erwähnen, dass der Tragbock vorzugsweise ein Längslenkerbock ist.

Zu erwähnen ist auch, dass als Verbindungstechnik zwischen den zu verbindenden Elementen z.B. Schraub-, Niet- und/oder Schweißverbindungen zum Einsatz kommen können, aber auch jedwede anderen geeigneten Befestigungstechniken.

Zu erwähnen ist außerdem, dass die Spantkonstruktion, der Längsträger, der zusätzliche Querträger und/oder die Zusatzverstrebung vorzugsweise als U-Profil ausgeführt ist. Der Querträger ist vorzugsweise ein U-Profil, ein T-Profil, ein Doppel-T- oder I-Profil, z.B. mit variierender Höhe.

Ferner ist zu erwähnen, dass die mittels "tiefer" und/oder "unter" in Beziehung stehenden Teile zweckmäßig in unterschiedlicher Höhe angeordnet sind, z.B. sich in einer Ebene erstrecken können, aber nicht zwingend müssen. Es ist z.B. auch möglich, dass sie versetzt zueinander angeordnet sind.

Die vorstehend beschriebenen Merkmale und bevorzugten Ausführungsformen der Erfindung sind beliebig miteinander kombinierbar. Andere vorteilhafte Weiterbildungen der Erfindung sind in den Unteransprüchen offenbart oder ergeben sich aus den nachstehenden Beschreibung bevorzugter Ausführungsformen in Verbindung mit den beigefügten Figuren.
- Fig. 1: zeigt eine perspektivische Ansicht eines Tragbocks für eine Tragkonstruktion gemäß einer Ausführungsform der Erfindung,
- Fig. 2: zeigt eine Seitenansicht auf den Tragbock der Fig. 1,
- Fig. 3: zeigt eine perspektivische Ansicht des Tragbocks der Figuren 1 und 2,
- Fig. 4: zeigt eine perspektivische Ansicht einer Tragkonstruktion für ein Nutzfahrzeug gemäß einer Ausführungsform der Erfindung,
- Fig. 5: zeigt eine perspektivische Ansicht der Tragkonstruktion der Fig. 4,
- Fig. 6: zeigt eine Frontalansicht der Tragkonstruktion der Figuren 4 und 5,
- Fig. 7: zeigt eine Draufsicht der Tragkonstruktion der Figuren 4-6,
- Fig. 8: zeigt eine Frontalansicht der Tragkonstruktion der Figuren 4-7 mit skizziertem Kraftflussprinzip,
- Fig. 9: zeigt ein nachteilhaftes Kraftflussprinzip,
- Fig. 10: zeigt eine explosionsartige Frontalansicht einer Tragkonstruktion der Figuren 4-8,
- Fig. 11: zeigt eine Frontalansicht einer Tragkonstruktion gemäß verschiedener Ausführungsformen der Erfindung,
- Fig. 12: zeigt einen Tragbock für eine Tragkonstruktion gemäß einer Ausführungsform der Erfindung,
- Fig. 13: zeigt einen Teil einer Tragkonstruktion gemäß einer Ausführungsform der Erfindung,
- Fig. 14: zeigt eine Seitenansicht einer Tragkonstruktion gemäß einer wiederum anderen Ausführungsform der Erfindung.

Die unter Bezugnahme auf die Figuren beschriebenen Ausführungsformen stimmen teilweise überein, wobei ähnliche oder gleiche Teile mit den gleichen Bezugszeichen versehen sind, und zu deren Erläuterung auch auf die Beschreibung anderer Ausführungsformen oder Figuren verwiesen wird, um Wiederholungen zu vermeiden.

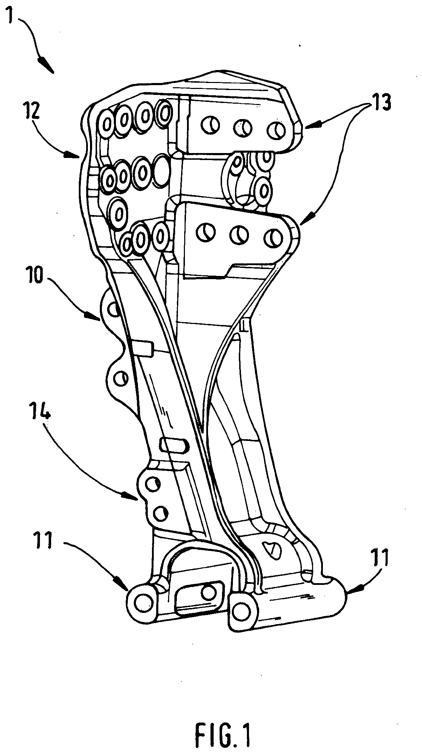

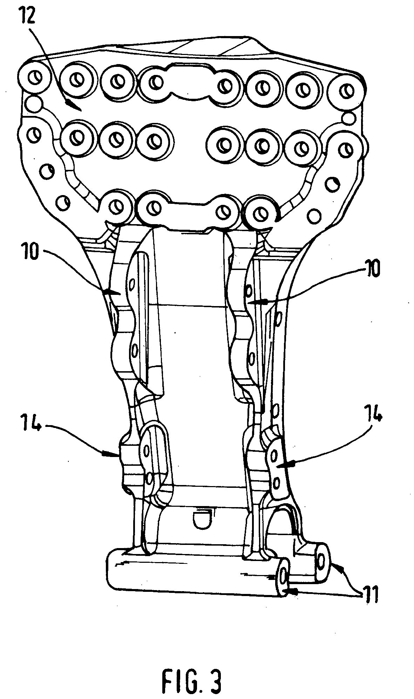

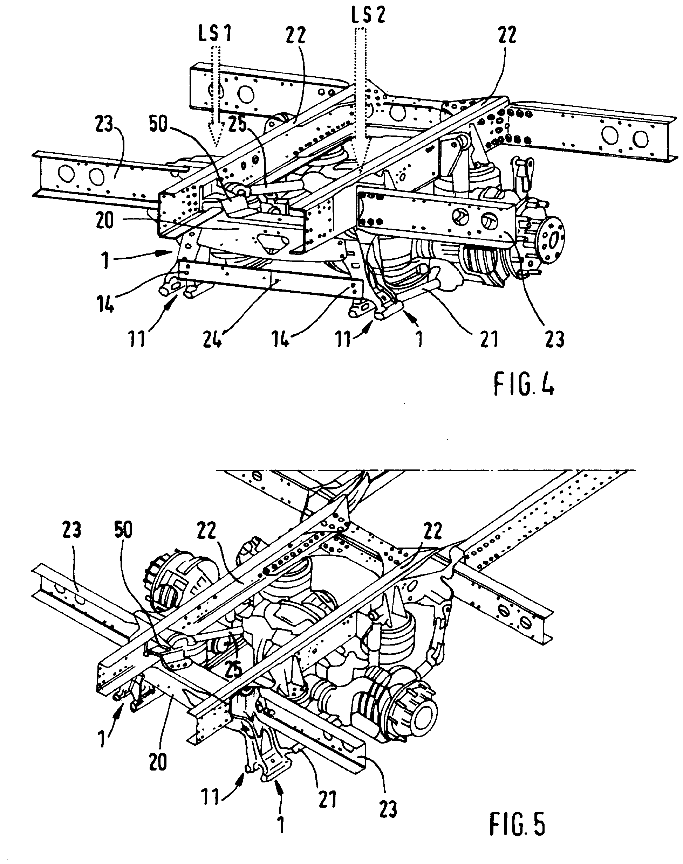

Die Figuren 1-3 zeigen unterschiedliche Ansichten eines Tragbocks 1. Der Tragbock 1 ist zur Verwendung in einer z.B. in Figur 4 gezeigten Tragkonstruktion für ein Nutzfahrzeug gemäß einer Ausführungsform der Erfindung vorgesehen.

Unter Bezugnahme auf die Figuren 1-3 in Zusammenschau mit z.B. Figur 4 ist der Tragbock 1 konfiguriert, um mittels einer Verbindungseinrichtung 10 mit einem Querträger 20 verbunden zu werden. Der Tragbock 1 umfasst ferner eine Verbindungseinrichtung 11 für eine Längslenkereinrichtung 21, über die die Längslenkereinrichtung an dem Tragbock 1 montierbar ist. Der Tragbock 1 umfasst auch eine Verbindungseinrichtung 12 für einen Längsträger 22, über den der Längsträger 22 an dem Tragbock 1 montierbar ist. Der Tragbock 1 umfasst außerdem eine Verbindungseinrichtung 13 für eine Spantkonstruktion 23 (z.B. ein U-Profil-Träger), über die die Spantkonstruktion 23 an dem Tragbock 1 montierbar ist. Die Verbindungseinrichtung 13 für die Spantkonstruktion 23 umfasst höhenmäßig voneinander beabstandete Flanschmittel, um Kräfte gezielt aufnehmen zu können. Außerdem umfasst der Tragbock 1 eine Verbindungseinrichtung 14 für einen zusätzlichen Querträger 24, über die der Querträger 24 an dem Tragbock 1 montierbar ist. Der Tragbock 1 kann außerdem eine oder mehrere zusätzliche Verbindungseinrichtungen aufweisen, z.B. für einen Dreieckslenker, eine Bremseinrichtung, eine Zusatzverstrebung zur Verstärkung der Tragkonstruktion, etc..

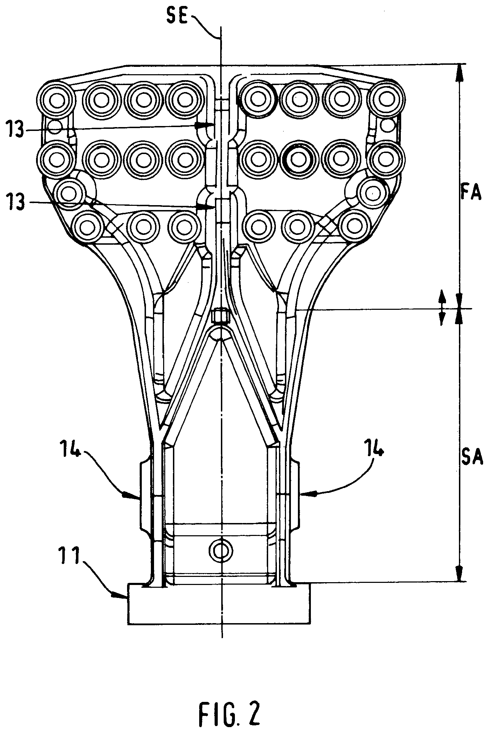

Wie insbesondere aus der Figur 2 ersichtlich wird, ist der Tragbock 1 relativ zu einer Symmetrieebene SE im Wesentlichen symmetrisch ausgeführt, zweckmäßig zumindest so symmetrisch, dass er an beiden Seiten LS1 und LS2 des Querträgers 20 verwendbar ist also zweckmäßig links und rechts in Bezug auf den Querträger 20. Dadurch kann der Querträger 20 mit zwei baugleichen Tragböcken 1 ausgestattet werden.

Bei der vorliegenden Ausführungsform wird die Symmetrieebene SE durch die Verbindungseinrichtung 13 für die Spantkonstruktion 23 definiert, die sich entlang der Mitte des Tragbocks 1 erstreckt.

Die Verbindungseinrichtung 10 für den Querträger 20 ist tiefer angeordnet als die Verbindungseinrichtung 13 für die Spantkonstruktion 23 und die Verbindungseinrichtung 12 für den Längsträger 22, wodurch ermöglicht wird, dass der Querträger 20 unter dem Niveau der Spantkonstruktion 23 und unter dem Niveau des Längsträgers 22 verläuft. Die Verbindungseinrichtung 14 für den zusätzlichen Querträger 24 wiederum ist tiefer angeordnet als die Verbindungseinrichtung 10 für den Querträger 20, wodurch ermöglicht wird, dass der zusätzliche Querträger 24 unter dem Niveau des Querträgers 20 verläuft und dadurch den Tragbock 1 oder allgemein die Tragkonstruktion wesentlich verstärken kann.

Der Grundkörper des Tragbocks 1 wird unter Bezugnahme auf die Figur 2 durch einen Stegabschnitt SA und einen im Wesentlichen quer dazu verlaufenden Flanschabschnitt FA definiert, wodurch eine im Wesentlichen T-förmige Gestalt gebildet wird. Der Übergang zwischen dem Stegabschnitt SA und dem Flanschabschnitt FA kann im Rahmen der Erfindung klassisch T-förmig oder fließend ausgeführt sein.

Der Grundkörper des Tragbocks 1 oder allgemein der Tragbock 1 ist als Gussteil ausgeführt, an dem im Rahmen der Erfindung aber durchaus Zusatzelemente montiert sein können, z.B. durch Schraub-, Niet- oder Schweißverbindungen.

Die Figuren 4-7 zeigen verschiedene Ansichten einer Tragkonstruktion gemäß einer Ausführungsform der Erfindung. Die Tragkonstruktion findet Verwendung in einem Nutzfahrzeug wie z.B. einem Omnibus oder einem Lastkraftwagen. Die Tragkonstruktion ist als Rahmen- oder Lenkkonstruktion, insbesondere Längslenkerkonstruktion, ausgeführt.

Unter Bezugnahme auf die Figuren 4-7 umfasst die Tragkonstruktion zwei Tragböcke 1, gleichwohl die Beschreibung sich mitunter auf nur einen Tragbock 1 bezieht.

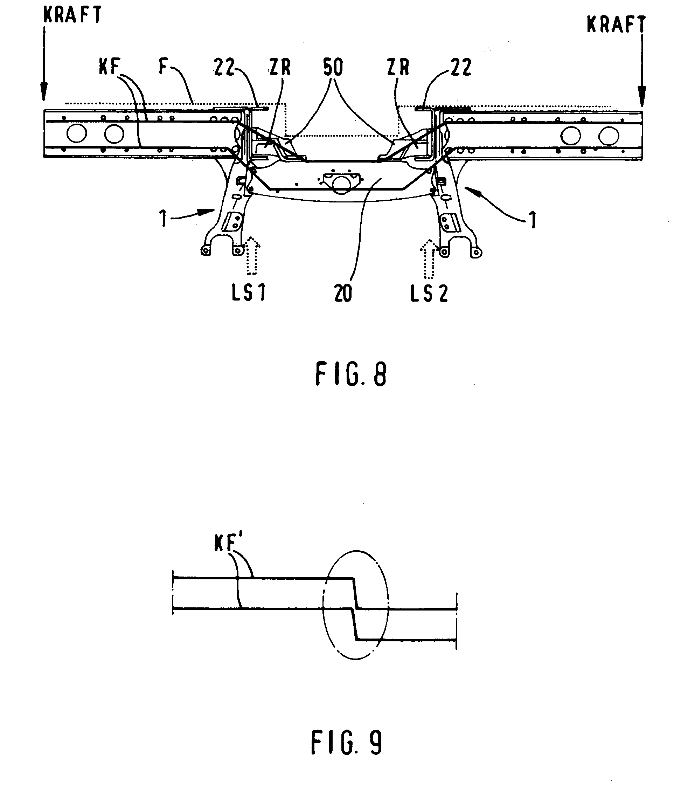

Die Tragkonstruktion im Rahmen der Erfindung umfasst zumindest einen Tragbock 1, der mit dem Querträger 20 und der Spantkonstruktion 23 so verbunden ist, dass ein zumindest den Tragbock 1, den Querträger 20 und die Spantkonstruktion 23 umfassender Kraftfluss KF (siehe Figur 8) ermöglicht wird.

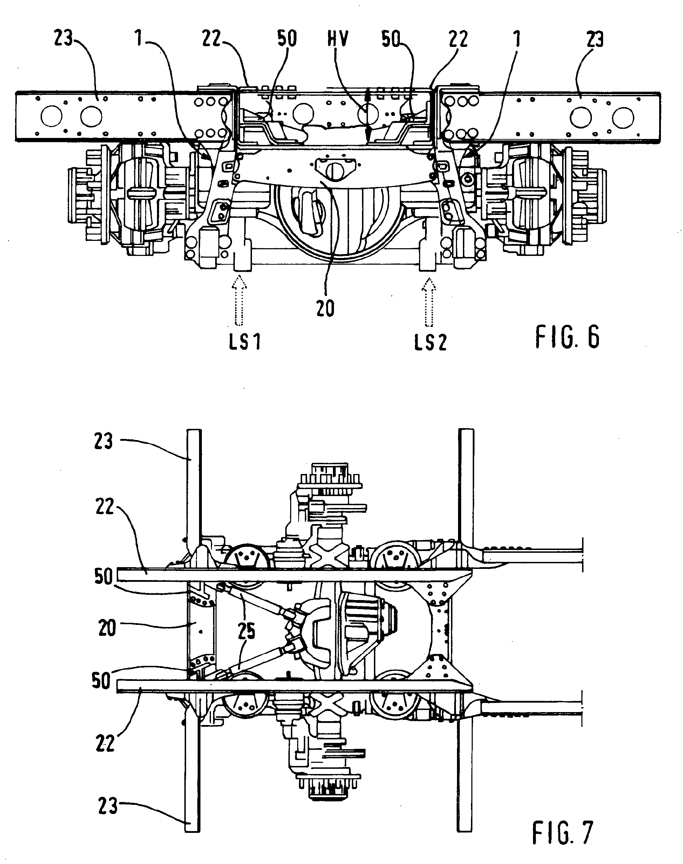

Eine Besonderheit der Tragkonstruktion ist, dass der Querträger 20 so unter dem Niveau der Spantkonstruktion 23 und vorzugsweise so unter dem Niveau des Längsträgers 22 verläuft, dass ein Höhenversatz HV (siehe Figur 6) geschaffen wird. In dem Höhenversatz HV ist zumindest eine Stützeinrichtung 50 angeordnet, die den Tragbock 1 aussteift und die zusätzlich als Tragbock für eine Dreieckslenkereinrichtung 25 dient. Die Stützeinrichtung 50 ist zwischen dem Niveau der
Oberkante des Querträgers 20 und dem Niveau der Oberkante(n) der Längsträger 22 und der Spantkonstruktionen 23 angeordnet. Der Höhenversatz HV entspricht ungefähr der Höhe des die Spantkonstruktion 23 oder den Längsträger 22 ausbildenden Tragprofils und beträgt z.B. zumindest 10cm, 15cm oder 20cm.

Bezugszeichen LS1 kennzeichnet die eine Seite des Querträgers 20 (in Figur 4 z.B. die linke Seite) und LS2 kennzeichnet die andere Seite des Querträgers 20 (in Figur 4 z.B. die rechte Seite). Eine weitere Besonderheit der Tragkonstruktion ist, dass der Querträger 20 an seinen beiden Seiten LS1 und LS2 jeweils einen baugleichen Tragbock 1 umfasst, der gemäß den Figuren 1-3 ausgeführt sein kann.

Zwischen dem Tragbock 1 und der Stützeinrichtung 50 verläuft der Längsträger 22. Die Spantkonstruktion 23 und der Längsträger 22 erstrecken sich auf im Wesentlichen gleichem Niveau. Die Stützeinrichtung 50 ist einerseits an dem Längsträger 22 und andererseits an dem Querträger 20 montiert. Der Tragbock 1, der Längsträger 22 und die Stützeinrichtung 50 werden über vorzugsweise ein und dieselben Festmachmittel miteinander verschraubt.

Ferner ist an dem Tragbock 1 der Längslenker 21 montiert und der zusätzliche Querträger 24, der sich unter dem Querträger 20 erstreckt, um die Tragkonstruktion weiter auszusteifen.

Der Tragbock 1 umfasst einen oberen Bereich, einen mittleren Bereich und einen unteren Bereich. Die Spantkonstruktion 23 ist an den oberen Bereich montiert und der Querträger 20 ist an den mittleren Bereich montiert. Der Längsträger 22 ist an den oberen Bereich montiert und der Längslenker 21 und der zusätzliche Querträger 24 sind an den unteren Bereich montiert.

Der Querträger 20, die Spantkonstruktion 23 und der zusätzliche Querträger 24 erstrecken sich parallel zueinander erstrecken und bilden einen Querträgerverband der Tragkonstruktion aus, der vorzugsweise vor der Triebachse des Nutzfahrzeugs angeordnet ist.

Figur 8 zeigt eine Frontalansicht eines Teils der in den Figuren 4 bis 7 gezeigten Tragkonstruktion. In Figur 8 ist schematisch der Fußboden F des Nutzfahrzeugs angedeutet. Zu sehen ist außerdem, dass die Stützeinrichtung 50 mittels eines Zwischenraums ZR abschnittsweise von dem Querträger 20 beabstandet ist.

Insbesondere aber zeigt Figur 8 schematisch ein Kraftflussprinzip KF, das durch die Tragkonstruktion realisierbar ist. Durch die in dem Höhenversatz HV angeordneten Stützeinrichtungen 50 werden die Tragböcke 1 ausgesteift. Insbesondere wird ein tragwerkstechnisch ungünstiger, sprunghafter Kraftfluss KF', wie in Figur 9 schematisch gezeigt, der ohne die Stützeinrichtungen 50 auftreten würde, zumindest reduziert und geglättet, wodurch eine sanftere Kraftflussänderung realisiert werden kann. Dadurch können natürlich auch Spannungsspitzen minimiert werden. Die Stützeinrichtungen 50 stützen somit den sprunghaften Knick ab und ermöglichen eine tragwerkstechnisch verbesserte, insbesondere sanfte Kraftflussänderung.

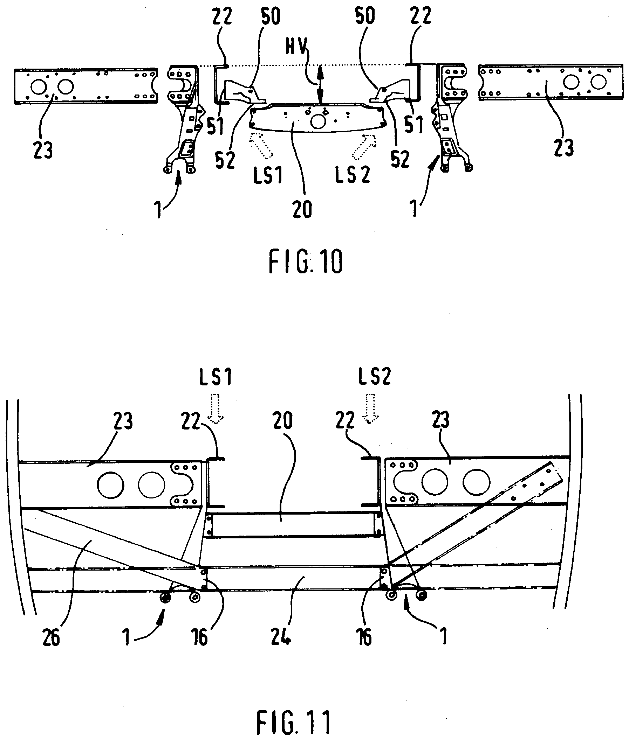

Figur 10 zeigt eine explosionsartige Frontalansicht der zuvor beschriebenen Ausführungsform der Figuren 4-8. Zu sehen ist mitunter, dass die Stützeinrichtung 50 als Winkelteil ausgeführt ist und eine Befestigungsfläche 51 aufweist, um an den Längsträger 22, insbesondere dessen Stegabschnitt, befestigt zu werden, und eine Befestigungsfläche 52, um an den Querträger 20, insbesondere dessen Flanschabschnitt, befestigt zu werden. Zu erwähnen ist, dass die Stützeinrichtung 50 an dem Steg- und/oder Flanschabschnitt des Querträgers 20 befestigt werden kann. Die Befestigungsflächen 51 und 52 der Stützeinrichtung 50 erstrecken sich im Wesentlichen rechtwinklig zueinander.

Figur 11 zeigt eine Frontalansicht einer Tragkonstruktion gemäß einer anderen Ausführungsform der Erfindung. Eine Besonderheit dieser Tragkonstruktion ist, dass sie Zusatzverstrebungen 26 zu ihrer Verstärkung umfasst, die einerseits über die Verbindungseinrichtungen 16 mit den Tragböcken 1 und andererseits mit den Spantkonstruktionen 23 und/oder dem Nutzfahrzeugaufbau (z.B. einer Seitenwand oder einer Seitensäule davon) verbunden sein können.

Es ist aber auch möglich, dass der zusätzliche Querträger 24 durch die Tragböcke 1 oder an den Tragböcken 1 einstückig vorbeigeführt wird, um mit dem Nutzfahrzeugaufbau verbunden zu werden, und somit zweckmäßig die Funktion der Zusatzverstrebungen 26 übernimmt. Die Zusatzverstrebungen 26 können, wie in Figur 11 zu sehen, parallel oder schräg zu dem Querträger 20 und den Spantkonstruktionen 23 verlaufen.

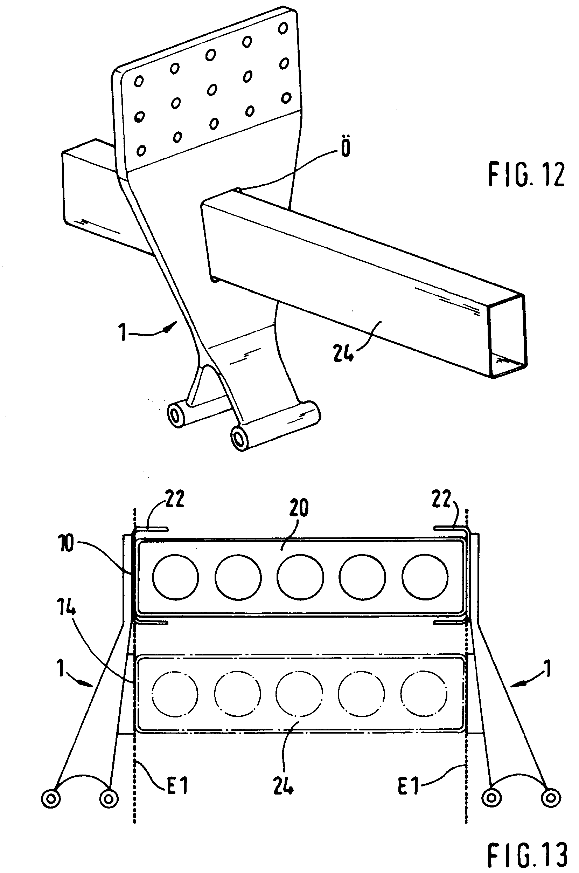

Figur 12 zeigt eine perspektivische Ansicht eines Tragbocks 1 für eine Tragkonstruktion gemäß einer wiederum anderen Ausführungsform der Erfindung. Eine Besonderheit dieses Tragbocks 1 ist eine Durchlassöffnung Ö, durch die ein zusätzlicher Querträger 24 durch den Tragbock 1 hindurchgeführt werden kann, um mit dem Nutzfahrzeugaufbau und/oder dem Tragbock 1 verbunden zu werden.

Figur 13 zeigt eine Frontalansicht einer Tragkonstruktion und Tragböcken 1 gemäß einer wiederum anderen Ausführungsform der Erfindung. Eine Besonderheit dieser Ausführungsform ist, dass die Verbindungseinrichtung 10 für den Querträger 20 und die Verbindungseinrichtung 14 für den zusätzlichen Querträger 24 so in einer Ebene E1 angeordnet sind, dass der Querträger 10 und der zusätzliche Querträger 24 gleich breit oder sogar baugleich ausgeführt sein können.

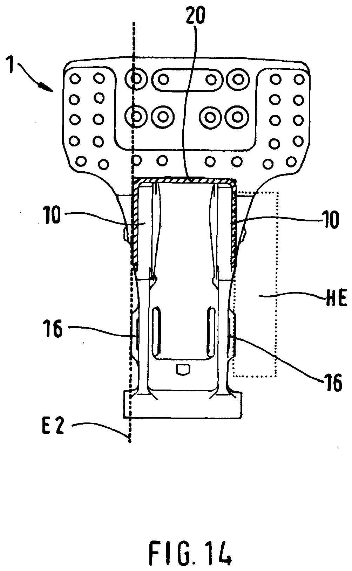

Figur 14 zeigt eine Seitenansicht einer Tragkonstruktion mit einem Tragbock 1 gemäß einer anderen Ausführungsform der Erfindung. Eine Besonderheit dieser Ausführungsform ist, dass die Verbindungseinrichtung 10 für den Querträger 20 und die Verbindungseinrichtung 16 für das zusätzliche Funktionsteil zueinander seitlich derart beabstandet sind, dass nach Montage eines Querträgers 20 an die Verbindungseinrichtung 10 die Oberfläche des Querträgers 20 und die Oberfläche der Verbindungseinrichtung 16 eine Ebene E2 bilden. Vorteilhaft darin ist, dass auf der Ebene E2 z.B. eine weitere Halteeinrichtung oder eine anderes geeignetes Funktionsteil HE befestigt werden kann, ohne dass Distanzstücke verwendet werden müssen.

Die Erfindung ist nicht auf die vorstehenden beschriebenen bevorzugten Ausführungsbeispiele beschränkt. Vielmehr sind eine Vielzahl von Varianten und Abwandlungen möglich, die ebenfalls von dem Erfindungsgedanken Gebrauch machen und deshalb in den, in den Ansprüche definierten, Schutzbereich fallen.

## Patentansprüche

1. Tragkonstruktion, insbesondere Rahmen- oder Lenkkonstruktion, für ein Kraftfahrzeug, vorzugsweise Nutzfahrzeug, mit zumindest einem Tragbock (1), mit dem zumindest ein Querträger (20) und eine Spantkonstruktion (23) verbunden ist, vorzugsweise, um einen zumindest den Tragbock (1), den Querträger (20) und die Spantkonstruktion (23) umfassenden Kraftfluss (KF) zu ermöglichen, wobei der Querträger (20) tiefer angeordnet ist als die Spantkonstruktion (23) und dadurch ein Höhenversatz (HV) erzeugt wird, **gekennzeichnet durch** zumindest eine Stützeinrichtung (50), die zwischen dem Querträger (20) und der Spantkonstruktion (23) angeordnet ist und/oder die zumindest abschnittsweise innerhalb des Höhenversatzes (HV) angeordnet ist, um den Tragbock (1) auszusteifen oder um einen sprunghaften, zumindest den Tragbock (1), den Querträger (20) und die Spantkonstruktion (23) umfassenden Kraftfluss (KF'), der ansonsten durch den Höhenversatz (HV) auftreten würde, zumindest zu reduzieren oder zu glätten, wodurch vorzugsweise eine sanftere Kraftflussrichtungsänderung realisierbar ist.

2. Tragkonstruktion nach Anspruch 1, **dadurch gekennzeichnet, dass** die Stützeinrichtung (50) als Tragbock für eine Lenkeinrichtung dient, insbesondere eine Dreiecklenkereinrichtung (25).

3. Tragkonstruktion nach einem der vorhergehenden Ansprüche, **dadurch gekennzeichnet, dass** ein Längsträger (22) zwischen dem Tragbock (1) und der Stützeinrichtung (50) verläuft.

4. Tragkonstruktion nach einem der vorhergehenden Ansprüche, **dadurch gekennzeichnet, dass** die Stützeinrichtung (50) mit dem Querträger (20), vorzugsweise einem im Wesentlichen vertikalen Abschnitt des Querträgers (20), und/oder einem Längsträger (22) verbunden ist.

5. Tragkonstruktion nach einem der vorhergehenden Ansprüche, **dadurch gekennzeichnet, dass** der Tragbock (1), der Längsträger (22) und die Stützeinrichtung (50) vorzugsweise über ein und dieselben Festmachmittel aneinander festgelegt sind, insbesondere miteinander verschraubt sind.

6. Tragkonstruktion nach einem der vorhergehenden Ansprüche, **dadurch gekennzeichnet, dass** die Stützeinrichtung (50) als Winkelteil ausgeführt ist und zwei Befestigungsflächen (51, 52) umfasst, die höhenmäßig zumindest abschnittsweise voneinander beabstandet sind und/oder die sich schräg oder im Wesentlichen rechtwinklig zueinander erstrecken.

7. Tragkonstruktion nach einem der vorhergehenden Ansprüche, **dadurch gekennzeichnet, dass** die Stützeinrichtung (50) mittels eines Zwischenraums (ZR) von dem Querträger (20) abschnittsweise beabstandet ist und/oder sich zumindest abschnittsweise entlang dem Querträger (20) erstreckt.

8. Tragkonstruktion nach einem der vorhergehenden Ansprüche, **dadurch gekennzeichnet, dass** der Tragbock (1) höhenmäßig voneinander beabstandete Flanschmittel aufweist, an denen die Spantkonstruktion (23) verbunden ist, vorzugsweise um den Kraftfluss (KF) definiert weiterleiten zu können.

9. Tragkonstruktion nach einem der vorhergehenden Ansprüche, **gekennzeichnet durch** einen zusätzlichen Querträger (24), der mit dem Tragbock (1) verbunden ist und der unter dem Niveau des Querträgers (20) verläuft.

10. Tragkonstruktion nach einem der vorhergehenden Ansprüche, **gekennzeichnet durch** eine Zusatzverstrebung (26) zur Verstärkung der Tragkonstruktion, die sich relativ zu dem Querträger (20) schräg oder im Wesentlichen parallel erstreckt.

11. Tragkonstruktion nach Anspruch 10, **dadurch gekennzeichnet, dass** die Zusatzverstrebung (26)
- sich zwischen dem Tragbock (1) und der Spantkonstruktion (23) erstreckt, vorzugsweise unter dem Niveau der Spantkonstruktion (23) und/oder seitlich zu dem Querträger (20), und/oder
- einerseits mit dem Tragbock (1) verbunden ist und andererseits mit der Spantkonstruktion (23) und/oder einem Nutzfahrzeugaufbau.

12. Tragkonstruktion nach einem der Ansprüche 9 bis 11, **dadurch gekennzeichnet, dass** der Querträger (20) und der zusätzliche Querträger (24) die im Wesentlichen gleiche Breite aufweisen oder baugleich ausgeführt sind.

13. Tragkonstruktion nach einem der vorhergehenden Ansprüche, **dadurch gekennzeichnet, dass** der Tragbock (1) einen oberen Bereich, einen mittleren Bereich und einen unteren Bereich umfasst, wobei die Spantkonstruktion (23) über den oberen Bereich und der Querträger (20) über den mittleren Bereich mit dem Tragbock (1) verbunden sind.

14. Tragkonstruktion nach einem der vorhergehenden Ansprüche, **dadurch gekennzeichnet, dass** zumindest der Grundkörper des Tragbocks (1) und/oder zumindest der Grundkörper der Stützeinrichtung (50) als Gussteil ausgeführt ist.

15. Tragkonstruktion nach einem der vorhergehenden Ansprüche, **dadurch gekennzeichnet, dass** der Längsträger (22) als U-Profil ausgeführt ist und die Stützeinrichtung (50) einerseits sich abschnittsweise zwischen den Flanschen des
U-Profils erstreckt und mit dem Steg des U-Profils verbunden ist, und andererseits mit dem Querträgers (20) verbunden ist, vorzugsweise mit einem oberen Abschnitt des Querträgers (20).

16. Tragkonstruktion nach einem der vorhergehenden Ansprüche, **dadurch gekennzeichnet, dass** der Querträger (20), die Spantkonstruktion (23), der zusätzliche Querträger (24) und/oder die Zusatzverstrebung (26) sich parallel zueinander erstrecken und/oder einen Querträgerverband bilden.

17. Tragkonstruktion nach einem der vorhergehenden Ansprüche, **dadurch gekennzeichnet, dass** der Höhenversatz (HV) zwischen dem Querträger (20) und der Spantkonstruktion (23) zumindest der Höhe des die Spantkonstruktion (23) oder den Längsträger (22) ausbildenden Tragprofils entspricht und/oder zumindest 10cm, 15cm oder 20cm beträgt.

18. Tragkonstruktion nach einem der vorhergehenden Ansprüche, **dadurch gekennzeichnet, dass** die Oberfläche des Querträgers (20) und die Oberfläche einer Verbindungseinrichtung (16) für ein zusätzliches Funktionsteil eine Ebene (E2) bilden.

19. Tragkonstruktion nach einem der vorhergehenden Ansprüche, **dadurch gekennzeichnet, dass** die Tragkonstruktion einen Querträgerverband umfasst, der vorzugsweise vor der Triebachse des Kraftfahrzeugs anzuordnen ist.

20. Tragkonstruktion nach einem der Ansprüche 10 bis 19, **dadurch gekennzeichnet, dass** der zusätzliche Querträger (24) und die Zusatzverstrebung (26) Einzelteile sind oder ein einstückiges, vorzugsweise integrales, Teil bilden.

21. Tragkonstruktion nach einem der vorhergehenden Ansprüche, **dadurch gekennzeichnet, dass** der Tragbock (1) relativ zu einer Symmetrieebene (SE) zumindest so nahezu symmetrisch ausgeführt ist, dass er an beiden Seiten (LS1, LS2) des Querträgers (20) verwendbar ist.

22. Tragkonstruktion nach einem der vorhergehenden Ansprüche, **dadurch gekennzeichnet, dass** jeweils ein Tragbock (1) an beiden Seiten (LS1, LS2) des Querträgers (20) angeordnet ist und die Tragböcke (1) baugleich ausgeführt sind.

## Claims

1. Carrier construction, in particular a frame or link construction, for a motor vehicle, preferably a utility vehicle, having at least one carrier support (1) to which at least one transverse carrier (20) and a frame construction (23) are connected, preferably in order to enable a force path (KF) which comprises at least the carrier support (1), the transverse carrier (20) and the frame construction (23), wherein the transverse carrier (20) is arranged lower than the frame construction (23) and a height displacement (HV) is thereby produced, **characterised by** at least one support device (50) which is arranged between the transverse carrier (20) and the frame construction (23) and/or which is arranged at least partially within the height displacement (HV) in order to strengthen the carrier support (1) or in order to at least reduce or smooth a discontinuous force path (KF') which comprises at least the carrier support (1), the transverse carrier (20) and the frame construction (23) and which would otherwise occur owing to the height displacement (HV), whereby a gentler force path direction change can preferably be produced.

2. Carrier construction according to Claim 1, **characterised in that** the support device (50) acts as a carrier support for a link device, in particular a triangular link device (25).

3. Carrier construction according to either of the preceding claims, **characterised in that** a longitudinal carrier (22) extends between the carrier support (1) and the support device (50).

4. Carrier construction according to any one of the preceding claims, **characterised in that** the support device (50) is connected to the transverse carrier (20), preferably a substantially vertical portion of the transverse carrier (20), and/or a longitudinal carrier (22).

5. Carrier construction according to any one of the preceding claims, **characterised in that** the carrier support (1), the longitudinal carrier (22) and the support device (50) are secured to each other preferably by means of one and the same securing means, in particular screwed together.

6. Carrier construction according to any one of the preceding claims, **characterised in that** the support device (50) is constructed as an angular component and comprises two securing faces (51, 52) which are spaced apart from each other at least partially in terms of height and/or which extend in an inclined manner or substantially perpendicularly relative to each other.

7. Carrier construction according to any one of the preceding claims, **characterised in that** the support device (50) is partially spaced apart from the transverse carrier (20) by means of an intermediate space (ZR) and/or extends at least partially along the transverse carrier (20).

8. Carrier construction according to any one of the preceding claims, **characterised in that** the carrier support (1) has flange means which are spaced apart from each other in terms of height and to which the frame construction (23) is connected, preferably in order to be able to transmit the force path (KF) in a defined manner.

9. Carrier construction according to any one of the preceding claims, **characterised by** an additional transverse carrier (24) which is connected to the carrier support (1) and which extends below the level of the transverse carrier (20).

10. Carrier construction according to any one of the preceding claims, **characterised by** an additional strut arrangement (26), which extends relative to the transverse carrier (20) in an inclined or substantially parallel manner, in order to reinforce the carrier construction.

11. Carrier construction according to Claim 10, **characterised in that** the additional strut arrangement (26)
- extends between the carrier support (1) and the frame construction (23), preferably below the level of the frame construction (23) and/or laterally relative to the transverse carrier (20), and/or
- is connected, on the one hand, to the carrier support (1) and, on the other hand, to the frame construction (23) and/or a utility vehicle structure.

12. Carrier construction according to any one of Claims 9 to 11, **characterised in that** the transverse carrier (20) and the additional transverse carrier (24) have substantially the same width or are constructed in a structurally identical manner.

13. Carrier construction according to any one of the preceding claims, **characterised in that** the carrier support (1) has an upper region, a central region and a lower region, the frame construction (23) being connected to the carrier support (1) by means of the upper region and the transverse carrier (20) being connected to the carrier support (1) by means of the central region.

14. Carrier construction according to any one of the preceding claims, **characterised in that** at least the base member of the carrier support (1) and/or at least the base member of the support device (50) is constructed as a cast component.

15. Carrier construction according to any one of the preceding claims, **characterised in that** the longitudinal carrier (22) is constructed as a U-shaped profile-member and the support device (50), on the one hand, extends partially between the flanges of the U-shaped profile-member and is connected to the web of the U-shaped profile-member and, on the other hand, is connected to the transverse carrier (20), preferably to an upper portion of the transverse carrier (20).

16. Carrier construction according to any one of the preceding claims, **characterised in that** the transverse carrier (20), the frame construction (23), the additional transverse carrier (24) and/or the additional strut arrangement (26) extend parallel with each other and/or form a transverse carrier assembly.

17. Carrier construction according to any one of the preceding claims, **characterised in that** the height displacement (HV) between the transverse carrier (20) and the frame construction (23) at least corresponds to the height of the carrier profile-member which forms the frame construction (23) or the longitudinal carrier (22) and/or is at least 10 cm, 15 cm or 20 cm.

18. Carrier construction according to any one of the preceding claims, **characterised in that** the surface of the transverse carrier (20) and the surface of a connection device (16) form a plane (E2) for an additional functional component.

19. Carrier construction according to any one of the preceding claims, **characterised in that** the carrier construction comprises a transverse carrier assembly which is preferably intended to be arranged upstream of the drive shaft of the motor vehicle.

20. Carrier construction according to any one of Claims 10 to 19, **characterised in that** the additional transverse carrier (24) and the additional strut arrangement (26) are individual components or form a one-piece, preferably integral, component.

21. Carrier construction according to any one of the preceding claims, **characterised in that** the carrier support (1) is constructed at least in such an almost symmetrical manner relative to a plane of symmetry (SE) that it can be used at both sides (LS1, LS2) of the transverse carrier (20).

22. Carrier construction according to any one of the preceding claims, **characterised in that** a carrier support (1) is arranged at each of the two sides (LS1, LS2) of the transverse carrier (20) and the carrier supports (1) are constructed in a structurally identical manner.

## Revendications

1. Structure portante, en particulier structure de châssis ou de direction pour un véhicule automobile, en particulier un véhicule utilitaire, avec au moins un chevalet (1), avec lequel au moins une traverse (20) et une structure de membrure (23) sont assemblées, de préférence afin de permettre un flux de force (KF) comprenant le chevalet (1), la traverse (20) et la structure de membrure (23), dans laquelle la traverse (20) est disposée plus bas que la structure de membrure (23) et produit de ce fait un décalage en hauteur (HV), **caractérisée par** au moins un dispositif de soutien (50), qui est disposé entre la traverse (20) et la structure de membrure (23) et/ou qui est disposé au moins en partie à l'intérieur du décalage en hauteur (HV), afin de raidir le chevalet (1) ou afin au moins de réduire ou de lisser un flux de force brusque (KF') comprenant au moins le chevalet (1), la traverse (20) et la structure de membrure (23), qui autrement se produirait à travers le décalage en hauteur (HV), permettant de réaliser ainsi une variation plus progressive de la direction du flux de force.

2. Structure portante selon la revendication 1, **caractérisée en ce que** le dispositif de soutien (50) sert de chevalet pour un dispositif de direction, en particulier un dispositif de levier triangulaire (25).

3. Structure portante selon l'une quelconque des revendications précédentes, **caractérisée en ce qu'**un longeron (22) s'étend entre le chevalet (1) et le dispositif de soutien (50).

4. Structure portante selon l'une quelconque des revendications précédentes, **caractérisée en ce que** le dispositif de soutien (50) est assemblé à la traverse (20), de préférence à une partie essentiellement verticale de la traverse (20), et/ou à un longeron (22).

5. Structure portante selon l'une quelconque des revendications précédentes, **caractérisée en ce que** le chevalet (1), le longeron (22) et le dispositif de soutien (50) sont fixés l'un à l'autre de préférence par un seul et même moyen de fixation, en particulier sont assemblés l'un à l'autre par des vis.

6. Structure portante selon l'une quelconque des revendications précédentes, **caractérisée en ce que** le dispositif de soutien (50) est formé par une pièce coudée et comprend deux faces de fixation (51, 52), qui sont au moins en partie espacées l'une de l'autre en hauteur et/ou qui s'étendent en oblique ou essentiellement perpendiculairement l'une par rapport à l'autre.

7. Structure portante selon l'une quelconque des revendications précédentes, **caractérisée en ce que** le dispositif de soutien (50) est en partie espacé de la traverse (20) par un espace intermédiaire (ZR) et/ou s'étend au moins en partie le long de la traverse (20).

8. Structure portante selon l'une quelconque des revendications précédentes, **caractérisée en ce que** le chevalet (1) présente des moyens d'ailes espacés l'un de l'autre en hauteur, auxquels la structure de membrure (23) est assemblée, de préférence afin de pouvoir retransmettre le flux de force (KF) de façon définie.

9. Structure portante selon l'une quelconque des revendications précédentes, **caractérisée par** une traverse supplémentaire (24), qui est assemblée au chevalet (1) et qui s'étend en dessous du niveau de la traverse (20).

10. Structure portante selon l'une quelconque des revendications précédentes, **caractérisée par** un entretoisement supplémentaire (26) pour renforcer la structure portante, qui s'étend en oblique ou essentiellement parallèlement par rapport à la traverse (20).

11. Structure portante selon la revendication 10, **caractérisée en ce que** l'entretoisement supplémentaire (26)
- s'étend entre le chevalet (1) et la structure de membrure (23), de préférence en dessous du niveau de la structure de membrure (23) et/ou latéralement à la traverse (20), et/ou
- est assemblé d'une part au chevalet (1) et d'autre part à la structure de membrure (23) et/ou à une carrosserie du véhicule utilitaire.

12. Structure portante selon l'une quelconque des revendications 9 à 11, **caractérisée en ce que** la traverse (20) et la traverse supplémentaire (24) présentent une largeur essentiellement égale ou sont de structure identique.

13. Structure portante selon l'une quelconque des revendications précédentes, **caractérisée en ce que** le chevalet (1) comprend une région supérieure, une région moyenne et une région inférieure, dans laquelle la structure de membrure (23) et la traverse (20) sont assemblées au chevalet (1) respectivement par la région supérieure et par la région moyenne.

14. Structure portante selon l'une quelconque des revendications précédentes, **caractérisée en ce qu'**au moins le corps de base du chevalet (1) et/ou au moins le corps de base du dispositif de soutien (50) est formé par une pièce coulée.

15. Structure portante selon l'une quelconque des revendications précédentes, **caractérisée en ce que** le longeron (22) est formé par un profilé en U et le dispositif de soutien (50) s'étend d'une part en partie entre les ailes du profilé en U et est assemblé à l'âme du profilé en U, et est d'autre part assemblé à la traverse (20), de préférence à une partie supérieure de la traverse (20).

16. Structure portante selon l'une quelconque des revendications précédentes, **caractérisée en ce que** la traverse (20), la structure de membrure (23), la traverse supplémentaire (24) et/ou l'entretoisement supplémentaire (26) s'étendent parallèlement l'un à l'autre et/ou forment un composite de traverse.

17. Structure portante selon l'une quelconque des revendications précédentes, **caractérisée en ce que** le décalage en hauteur (HV) entre la traverse (20) et la structure de membrure (23) correspond au moins à la hauteur du profilé de support formant la structure de membrure (23) ou le longeron (22) et/ou vaut au moins 10 cm, 15 cm ou 20 cm.

18. Structure portante selon l'une quelconque des revendications précédentes, **caractérisée en ce que** la surface de la traverse (20) et la surface d'un dispositif d'assemblage (16) pour une pièce fonctionnelle supplémentaire forment un plan (E2).

19. Structure portante selon l'une quelconque des revendications précédentes, **caractérisée en ce que** la structure portante comprend un composite de traverse, qui doit être disposé de préférence devant l'essieu moteur du véhicule automobile.

20. Structure portante selon l'une quelconque des revendications 10 à 19, **caractérisée en ce que** la traverse supplémentaire (24) et l'entretoisement supplémentaire (26) sont des pièces individuelles ou forment une pièce unique, de préférence intégrale.

21. Structure portante selon l'une quelconque des revendications précédentes, **caractérisée en ce que** le chevalet (1) est réalisé de façon au moins presque symétrique par rapport à un plan de symétrie (SE), de telle manière qu'il puisse être utilisé sur les deux côtés (LS1, LS2) de la traverse (20).

22. Structure portante selon l'une quelconque des revendications précédentes, **caractérisée en ce qu'**un chevalet (1) est disposé respectivement sur les deux côtés (LS1, LS2) de la traverse (20) et les chevalets (1) sont de construction identique.
